# EUROPEAN PATENT SPECIFICATION

(11) **EP 1 190 796 B1**
(45) Date of publication and mention of the grant of the patent: **18.12.2002**
(21) Application number: 01125038.8
(22) Date of filing: 22.10.2001
(51) Int. Cl.: B23B 31/107

(54) **Chuck**
Futter
Mandrin

(30) Priority: 25.10.2000 GB 0026051
(43) Date of publication of application: 27.03.2002
(73) Proprietor: UNIVERSAL DRILLING AND CUTTING EQUIPMENT LIMITED, Sheffield, South Yorkshire S9 5JF (GB)
(72) Inventor: Gascoyne, Brian, Killamarsh, Sheffield S21 1GE (GB)
(74) Representative: Long, Edward Anthony

(56) References cited:
- EP-A- 0 056 266
- FR-A- 2 243 758
- US-A- 3 030 121
- US-A- 3 353 834

## Description

### Field of the Invention

This invention relates to an arbor adapted to be fitted a clamping end to, a chuck, spindle etc of a machine, or machine tool, and at a cutting end to receive and clamp a cutter.

### Background of the Invention

A known arbor comprises, towards its cutting end, a pair of tapped, radial holes extending at 90° to one another. Each hole receives a grub screw with a recessed hexagon head to receive an Allen key, so that the grub screws may be screwed in, to engage flats provided on a shank of the cutter, to clamp the shank onto a receiving socket of the cutting end.

It is not unknown for Allen keys to be lost, for only wrong sized Allen keys to be available, or for the grub screws to be cross-threaded, particularly for on site or remote locations, such as railway track, where a solution might not readily be available.

Furthermore, only the ends of the grub screws are in contact with the flats, providing relatively limited effective clamping areas.

In FR 2243758A on which is based the preamble of claim 1, is described a quick release arbor with a pin, spring loaded radially outwardly, having a flat inner surface adapted to engage a flat of a shank of a cutter, and with an opposed arcuate surface, adapted to engage a cam surface of a co-axial, spring loaded collar. The single pin provides limited contact area with the flat of a shank of a cutter tool.

In US 3030121 is described a self-tightening chuck for a drill bit, the chuck having a key pivotally attached to a portion of the chuck, the key being manually pivotable between an inactive, release position, and an active position in which a flat of the drill bit is engaged by a flat of the key, with a manually operable clamping collar adapted to be screwed along a threaded portion of the chuck between key engaging or non-engaging positions during the course of fitting, or removal, of a drill shank.

### Object of the Invention

A basic object of the invention is the provision of an improved arbor.

### Summary of the Invention

According to the present invention, there is provided an arbor comprising the features of claim 1.

### Advantages of the Invention

The arbor in accordance with the invention provides a quick release, screwless action, avoiding the drawbacks of grub screws, and the time taken to tighten or release such screws during the fitting or replacement of a cutter.

Furthermore, the abutment surface of the key provides a substantially increased contact area with the engaged flat of the cutter shank.

Furthermore, the arbor in accordance with the invention requires but a single flat, and hence can accommodate a miscellany of cutters of different manufacturers having 1,2, 3 or 4 flats on the cutter shank.

### Features of embodiments of the Invention

The key is of segmental shape having an arcuate displacement surface in engagement with the cam surface of the collar.

The cutting end of the body member is provided with a transverse slot to receive the key.

The transverse slot is provided with two spaced-apart blind holes, each to receive one end of a coil compression spring, which at their other ends bear on the abutment surface of the key to bias the latter radially outwardly towards its cutter release position, clear of the socket.

The spring bias on the collar is provided by a torsion spring, one end of which engages an aperture in the body member, and the other end of which engages an aperture in the collar, to rotationally bias the collar to a position in which its cam surface urges the key radially inwardly into its cutter clamping position, penetrating the socket.

The body member is provided with a circumferential flange against which one end of the collar is adapted to abut, with the collar being retained on the cutting end of the body member by a circlip.

The one clamping of the body member is appropriately profiled eg by having a Morse taper, for the spindle etc of a drilling machine etc in which it is to be clamped.

### Operation

It follows that, to insert a cutter shank into an arbor in accordance with the invention, the collar is firstly manually rotated against its spring bias to permit the curved, displacement surface of the key to ride down the cam surface of the collar to permit the key to be radially retracted from its cutter clamping position by its spring bias. Once fully inserted (but probably not clamped unless, by chance the, or a flat, of the cutter shank were opposite the key), the collar is manually released permitting the spring bias on the collar to rotate the collar whereby the curved displacement surface of the key rides up the cam surface of the collar to overcome the radially outward bias on the key, so that, with slight manual rotation of the cutter, flat-to-key engagement is found, with removal of a cutter following a reversal of this procedure.

One embodiment of arbor in accordance with the invention is shown by way of example only, in the accompanying drawings in which:

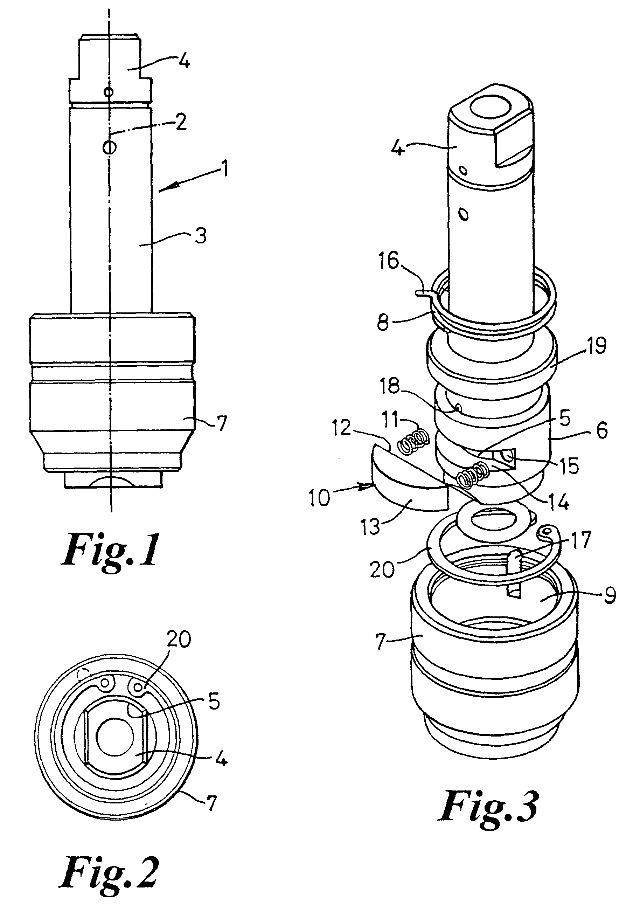

Figure 1 is a side elevation of an arbor in accordance with the invention;
Figure 2 is an end elevation of Figure 1; and
Figure 3 is an exploded view of the arbor of Figures 1 and 2.

An arbor 1 has an axis of rotation 2 and comprises a body member 3 having a clamping end 4 provided with flats so that it may be drivably secured in a spindle or chuck of a machine or machine tool. The body member 3 has a co-axial socket 5 provided at its opposite, cutting end 6 to receive a shank of a rotary cutter (not shown), the shank having, in the conventional manner, at least one flat. The arbor 1, further comprises a collar 7 carried at the cutting end 6, which collar 7 is biassed by a torsion spring 8 to an active position and is manually rotatable, within limits, against the bias of spring 8, to an inactive position. A cam surface 9 is provided internally of the collar 7 and a segmental key 10, which is biassed radially outwardly by a pair of coil compression springs 11 to a cutter release position, has a flat, abutment surface 12, and an opposed, curved, displacement surface 13 engageable by the cam surface 9, and is also carried by the cutting end 6 of the arbor 1. Upon sufficient manual rotation of the collar 7 against its spring bias, the key 10 is permitted to be displaced under the bias of its springs 11 to the cutter insertion or removal position, in which the key 10 is clear of the socket 5 to permit insertion or removal of a shank of a cutter into the socket 5. Upon manual release of the collar 7, permitting rotation of the collar 7 under its spring bias, to an active position, the cam surface 9 displaces the key 10 radially inwardly against the bias of springs 11 until at least the abutment surface 12 of the key 10 penetrates a portion of the socket 5 to engage a, or the, flat of an inserted cutter shank, with the cam surface 9 of the collar maintaining its engagement with the displacement surface 13 of the key 10 to maintain the key 10 in its active position.

The key 10 is received in a transverse slot 14 in the cutting end 6 of the body member 3, whilst each coil compression spring 11 is located in a blind bore 15. The torsion spring 8 has one end 16 adapted to engage an aperture 17 while its other end adapted to engage an aperture 18 in the body member 3. The body member 3 is also provided with a circumferential flange 19 against which a portion of the collar 7 abuts to be retained by a circlip 20.

## Claims

1. An arbor (1) having a longitudinal axis of rotation (2) and comprising a body member (3) having a clamping end (4) adapted to be drivably secured in a spindle or chuck etc of a machine or machine tool, and having a co-axial socket (5) at its opposite, cutting end to (6) receive a shank of a rotary cutter, the shank having at least one flat, the arbor comprising a rotatable collar (7) carried by its cutting end, which collar is spring biassed in one direction of rotation to an active position and is manually rotatable, within limits, against the spring bias (8), to an inactive position; a cam surface (9) provided internally of the collar (7); and a pin (10) also carried by the cutting end of the arbor, which pin is spring biassed (11) radially outwardly to a cutter release position, having a flat, abutment surface (12) to engage, after displacement to a cutter clamping position a corresponding flat of a shank of a cutter, the pin (10) having an opposed, curved, displacement surface (13) engageable by the cam surface (9) of the collar, and which pin, upon suitable manual rotation of the collar (7), is permitted to be displaced radially outwardly under its spring bias, to the cutter release position, in which position the pin (10) is clear of the socket to permit insertion, or removal, of a shank of a cutter into, or from, the socket, and upon manual release of the collar (7), permitting rotation of the collar under its spring bias, to displace the pin (10) radially inwardly against its spring bias to a cutter clamping position, in which at least the abutment surface (12) of the pin penetrates a portion of the socket to engage a flat of an inserted cutter shank, with the cam surface (9) of the collar maintaining its engagement with the displacement surface (13) of the pin, to maintain the pin (10) in its cutter clamping position, **characterised in that**
(i) the pin is in the form of a key (10) of segmental shape having firstly an arcuate displacement surface (13) in engagement with the cam surface (9) of the collar (7), and secondly an opposed, chordal flat abutment surface (12) adapted, in use, to engage a flat of a shank of a rotary cutter, and
(ii) the body member (3) is provided with spaced-apart, parallel, radially extending faces defining a key receiving slot (14), which intersects the socket (5), whereby, upon manual rotation of the collar (7) against its spring bias, the key (10), under the influence of its spring bias automatically retracts ***radially,*** having regard to the axis of rotation of the arbor, from a cutter clamping position against the cam surface (9) of the collar (7), to permit insertion of a cutter shank, and after such insertion, manual release of the collar (7) permits the key (10) to be displaced ***radially*** inwardly by the bias of the spring means (11).

2. An arbor as claimed in Claim 1, **characterised in that** the transverse slot (14) is provided with two spaced-apart blind holes (15), each to receive one end of a coil compression spring (11), which at their other ends bear on the abutment surface (12) of the key (10) to bias the latter radially outwardly towards its cutter release position, clear of the socket (5).

3. An arbor as claimed in Claim 1 or Claim 2, **characterised in that** the spring bias on the collar (7) is provided by a torsion spring (8), one end of which engages an aperture (18) in the body member (3), and the other end (16) of which engages an aperture (17) in the collar (7), to rotationally bias the collar (7) to a position in which its cam surface (9) urges the key (10) radially inwardly into its cutter clamping position, penetrating the socket (5).

4. An arbor as claimed in any preceding claim, **characterised in that** the body member (3) is provided with a circumferential flange (19) against which one end of the collar (7) is adapted to abut, with the collar (7) being retained on the cutting end (6) of the body member (3) by a circlip (20).

5. An arbor as claimed in any preceding claim, **characterised in that** the clamping end (4) of the body member (3) is appropriately profiled eg by having a Morse taper, for the spindle etc in which it is to be clamped.

## Patentansprüche

1. Dorn (1), der eine Längsdrehachse (2) aufweist und ein Körperelement (3) umfasst, welches ein Einspannende (4), das geeignet ist, kraftschlüssig in einer Spindel oder Spannvorrichtung einer Maschine oder einer Werkzeugmaschine usw. befestigt zu sein, und eine koaxiale Fassung (5) an seinem entgegen gesetzten Schneidende (6) aufweist, um einen Schaft einer rund laufenden Drehschneidemaschine aufzunehmen, wobei der Schaft zumindest eine Spannfläche aufweist, der Dorn umfassend eine drehbare Manschette (7), die von seinem Schneidende getragen ist, wobei die Manschette durch Federkraft in eine Drehrichtung in eine aktive Position gedrückt ist und manuell, innerhalb von Grenzen, gegen den Federdruck (8) in eine inaktive Position drehbar ist; eine Nockenfläche (9), die innerhalb der Manschette (7) vorgesehen ist; und einen Stift (10), der auch vom Schneidende des Dorns getragen ist, durch Federkraft (11) radial nach außen in eine Schneidemaschinenfreigabeposition gedrückt ist, eine flache Widerlagerfläche (12) aufweist, um nach Verschiebung in eine Schneidemaschineneinspannposition eine entsprechende Spannfläche eines Schafts einer Schneidemaschine in Eingriff zu nehmen, eine entgegen gesetzte, gekrümmte Verschiebungsfläche (13) aufweist, die durch die Nockenfläche (9) in Eingriff nehmbar ist, und dem es auf geeignete manuelle Drehung der Manschette (7) hin ermöglicht ist, dass er unter seinem Federdruck radial nach außen in die Freigabeposition der Schneidemaschine verschoben ist, in welcher der Stift (10) auf Abstand zur Fassung ist, um die Einführung oder Entfernung eines Schafts einer Schneidemaschine in die oder aus der Fassung zu ermöglichen, und auf manuelle Freigabe der Manschette (7) hin, welche eine Drehung der Manschette unter ihrem Federdruck ermöglicht, der Stift (10) radial nach innen gegen seinen Federdruck in eine Schneidemaschineneinspannposition verschoben ist, in welcher zumindest die Widerlagerfläche (12) des Stifts einen Abschnitt der Fassung durchdringt, um eine Spannfläche eines eingeführten Schafts einer Schneidemaschine in Eingriff zu nehmen, wobei die Nockenfläche (9) der Manschette ihre Ineingriffnahme der Verschiebungsfläche (13) beibehält, um den Stift (10) in seiner Schneidemaschineneinspannposition zu halten, **dadurch gekennzeichnet, dass**
(i) der Stift in Form eines Keils (10) mit Segmentform ausgebildet ist und zunächst eine gebogene Verschiebungsfläche (13) in Ineingriffnahme mit der Nockenfläche (9) der Manschette aufweist, um eine Spannfläche eines Schafts einer rund laufenden Drehschneidemaschine in Eingriff zu nehmen, und
(ii) das Körperelement (3) mit räumlich voneinander getrennten, parallelen, sich radial erstreckenden Seiten versehen ist, die einen Keilaufnahmeschlitz (14) definieren, welcher die Fassung (5) durchschneidet, wobei auf manuelle Drehung der Manschette (7) gegen ihren Federdruck hin sich der Keil (10) unter dem Einfluss seiner Federkraft automatisch *radial* bezüglich der Drehachse des Dorns von einer Schneidemaschineneinspannposition gegen die Nockenfläche (9) der Manschette (7) zurückzieht, um die Einführung eines Schafts einer Schneidemaschine zu ermöglichen, wobei nach einer derartigen Einführung manuelle Freigabe der Manschette (7) dem Keil (10) ermöglicht, *radial* nach innen durch die Federkraft der Federmittel (11) verschoben zu sein.

2. Dorn nach Anspruch 1, **dadurch gekennzeichnet, dass** der Querschlitz (14) mit zwei räumlich voneinander getrennten Sacklöchern (15) versehen ist, die jeweils ein Ende einer jeweiligen Spiraldruckfeder (11) aufnehmen, deren andere Enden an der Widerlagerfläche (12) des Keils (10) anliegen, um diesen radial nach außen in seine Schneidemaschinenfreigabeposition auf Abstand zur Fassung (5) zu drücken.

3. Dorn nach einem der Ansprüche 1 oder 2, **dadurch gekennzeichnet, dass** der Federdruck auf die Manschette (7) durch eine Torsionsfeder (8) vorgesehen ist, deren eines Ende eine Öffnung (18) im Körperelement (3) in Eingriff nimmt, und deren anderes Ende (16) eine Öffnung (17) in der Manschette (7) in Eingriff nimmt, um die Manschette (7) drehend in eine Position zu drücken, in der ihre Nockenfläche (9) den Keil (10) radial nach innen in seine Schneidemaschineneinspannposition drängt, wobei er die Fassung (5) durchdringt.

4. Dorn nach einem der vorhergehenden Ansprüche, **dadurch gekennzeichnet, dass** das Körperelement (3) mit einem umfänglichen Flansch (19) versehen ist, gegen den ein Ende der Manschette (7) geeignet ist anzugrenzen, wobei die Manschette (7) am Schneidende (6) des Körperelements (3) durch einen Seegerring (20) zurückgehalten ist.

5. Dorn nach einem der vorhergehenden Ansprüche, **dadurch gekennzeichnet, dass** das Einspannende (4) des Körperelements (3) in geeigneter Weise ausgebildet ist, z.B. durch Aufweisen eines Morsekegels für die Spindel usw., in die es eingespannt sein soll.

## Revendications

1. Arbre (1) possédant un axe de rotation longitudinal (2) et comprenant un corps (3) présentant une extrémité de serrage (4) adaptée à être montée de façon pilotable dans une broche ou un mandrin, etc, d'une machine ou d'une machine-outil, et possédant une douille coaxiale (5) à son extrémité de coupe opposée (6) pour recevoir une tige d'un outil de coupe rotatif, la tige possédant au moins une facette, l'arbre comprenant un collet rotatif (7) porté par son extrémité de coupe, collet qui subit une sollicitation élastique, dans une direction de rotation, vers une position active et peut être amené manuellement à tourner, dans certaines limites, à l'encontre de la force de sollicitation élastique (8), vers une position inactive ; une surface formant came (9), prévue à l'intérieur du collet (7), et un doigt (10) également porté par l'extrémité de coupe de l'arbre, doigt qui est sollicité élastiquement (11) radialement vers l'extérieur, en direction d'une position de dégagement de l'outil de coupe, possédant une surface de butée (12) plate destinée à coopérer, après déplacement vers une position de serrage de l'outil de coupe, avec une facette correspondante d'une tige d'outil de coupe, le doigt (10) présentant une surface de déplacement (13) opposée, courbe, susceptible de coopérer avec la surface formant came (9) du collet, et doigt qui, après mise en rotation manuelle adaptée du collet (7), peut être déplacé radialement vers l'extérieur sous l'action de son élément de sollicitation élastique, vers la position de dégagement de l'outil de coupe, position dans laquelle le doigt est dégagé de la douille afin de permettre l'insertion ou le retrait, de la douille, d'une tige d'un outil de coupe et, après dégagement manuel du collet (7), afin de permettre la rotation du collet sous l'action de son élément de pression élastique, afin de déplacer le doigt radialement vers I'intérieur, à l'encontre de la force de son élément élastique, vers une position de serrage d'outil de coupe, dans laquelle au moins la surface de butée (12) du doigt pénètre dans une partie de la douille pour coopérer avec une facette d'une tige d'outil de coupe insérée, la surface formant came (9) du collet conservant son contact avec la surface de déplacement (13) du doigt, afin de maintenir le doigt (10) dans sa position de serrage d'outil de coupe, **caractérisé en ce que**
(i) le doigt se présente sous la forme d'une clavette (10) de forme segmentée possédant premièrement une surface de déplacement (13) courbe coopérant avec la surface formant came (9) du collet (7) et deuxièmement une surface de butée (12) plate, chordale, opposée, susceptible, en cours d'utilisation, de coopérer avec une facette d'une tige d'outil de coupe rotatif, et **en ce que**
ii) le corps (3) est pourvu de faces espacées, parallèles, s'étendant radialement, définissant une fente (14) pour recevoir la clavette, qui coupe la douille (5), la clavette (10), après rotation manuelle du collet (7) à l'encontre de son élément de pression élastique, sous l'influence de celui-ci, se rétractant automatiquement *radialement,* par rapport à l'axe de rotation de l'arbre, à partir d'une position de serrage d'outil de coupe, contre la surface formant came (9) du collet (7), afin de permettre l'insertion d'une tige d'outil de coupe et, après cette insertion, le dégagement manuel du collet (7) permettant à la clavette (10) d'être déplacée *radialement* vers l'intérieur, sous l'effet de l'élément élastique (11).

2. Arbre selon la revendication 1, **caractérisé en ce que** la fente transversale (14) est pourvue de deux trous borgnes (15) espacés l'un de l'autre, chacun étant destiné à recevoir une extrémité d'un ressort de compression hélicoïdal (11), ces trous reposant, à leur autre extrémité, sur la surface de butée (12) de la clavette (10) afin de solliciter cette dernière radialement vers l'extérieur en direction de sa position de dégagement de l'outil de coupe, en-dehors de la douille (5).

3. Arbre selon la revendication 1 ou la revendication 2, **caractérisé en ce que** l'action élastique sur le collet (7) est exercée par un ressort de torsion (8), dont une extrémité coopère avec une ouverture (18) ménagée dans le corps (3) et l'autre extrémité (16) coopère avec une ouverture (17) ménagée dans le collet (7), afin de solliciter et faire tourner le collet (7) dans une position dans laquelle sa surface formant came (9) pousse la clavette (10) radialement vers l'intérieur vers sa position de serrage d'outil de coupe, en pénétrant dans la douille (5).

4. Arbre selon l'une quelconque des revendications précédentes, **caractérisé en ce que** le corps (3) est pourvu d'une bride circonférentielle (19) contre laquelle une extrémité du collet (7) est susceptible de venir buter, le collet (7) étant retenu sur l'extrémité de coupe (6) du corps (3) par un circlip (20).

5. Arbre selon l'une quelconque des revendications précédentes, **caractérisé en ce que** l'extrémité de serrage (4) du corps (3) présente un profil adapté, par exemple un cône Morse, destiné à la broche, etc, dans laquelle elle est destinée à être serrée.
